(19) Europäisches Patentamt / European Patent Office / Office européen des brevets

(11) **EP 2 908 004 B1**

(12) **EUROPEAN PATENT SPECIFICATION**

(45) Date of publication and mention
of the grant of the patent:
**12.10.2016 Bulletin 2016/41**

(21) Application number: **13871350.8**

(22) Date of filing: **15.01.2013**

(51) Int Cl.:
*F03D 7/04* (2006.01)   *H02P 9/00* (2006.01)
*H02J 3/36* (2006.01)   *H02J 3/38* (2006.01)

(86) International application number:
**PCT/JP2013/050523**

(87) International publication number:
**WO 2014/112033 (24.07.2014 Gazette 2014/30)**

(54) **WIND POWER GENERATION FACILITY, METHOD FOR OPERATING SAME, AND WIND FARM CONTROL DEVICE**

WINDENERGIEERZEUGUNGSANLAGE, VERFAHREN ZUM BETRIEB DAVON UND WINDPARKSTEUERUNGSVORRICHTUNG

INSTALLATION DE PRODUCTION D'ÉNERGIE ÉOLIENNE, PROCÉDÉ D'ACTIONNEMENT DE CELLE-CI ET DISPOSITIF DE COMMANDE DE PARC ÉOLIEN

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(43) Date of publication of application:
**19.08.2015 Bulletin 2015/34**

(73) Proprietor: **Mitsubishi Heavy Industries, Ltd.
Tokyo 108-8215 (JP)**

(72) Inventors:
• **YAMASHITA, Yukio**
  **Tokyo 108-8215 (JP)**
• **SHINODA, Hisanobu**
  **Tokyo 108-8215 (JP)**
• **NAKA, Takehiro**
  **Tokyo 108-8215 (JP)**
• **WAKASA, Tsuyoshi**
  **Tokyo 108-8215 (JP)**

(74) Representative: **Intès, Didier Gérard André et al
Cabinet Beau de Loménie
158 rue de l'Université
75340 Paris Cedex 07 (FR)**

(56) References cited:
EP-A1- 2 528 184       WO-A1-2008/131799
WO-A1-2009/078076       JP-A- 2008 125 155
JP-A- 2008 161 046       JP-A- 2010 187 482
JP-A- 2011 217 574       US-A1- 2002 110 007
US-A1- 2012 268 081

**Description**

TECHNICAL FIELD

The present disclosure relates to a wind power generation facility, a method of operating the same, and a wind farm control device.

BACKGROUND

In view of preservation of the global environment, large-scale wind power generation facilities have become increasingly popular in recent years. A wind power generation facility generally includes a wind farm including a plurality of wind turbine generators and a wind farm controller (WF controller) which centrally controls the plurality of wind turbine generators.

A wind power generation facility or wind turbine generators connected to a utility grid (system) need to follow a grid code (a grid-interconnection code). A grid code contains a Fault Ride Through (FRT) regulation which requires the interconnection of the power generation facility to be maintained as long as a decrease in voltage or duration of the voltage decrease is within a predetermined range even in the event of, for instance, a grid fault such as a short circuit and a grounding fault.

For instance, Patent Document 1 discloses an FRT technique for a wind turbine generator in which a permanent magnetic generator of the wind turbine generator is connected to a grid via a generator converter and a system inverter. The FRT technology of Patent Document 1 dissipates excessive energy of active power outputted by the wind turbine generator that cannot be received by the grid by utilizing an electric resistor disposed between the permanent magnetic generator and the generator converter or an electric resistor disposed between the generator converter and the system inverter.

Meanwhile, a wind power generation facility is often located away from a connection point to a grid, such as on the ocean or in the mountains. For instance, an offshore wind power generation facility may be planned to be located more than 100km away from a connection point to a grid. In this case, if electric power is transmitted over a long distance from the wind power generation facility to the connection point to the grid, direct current transmission, which involves no reactive power, is more advantageous than alternate current transmission in terms of transmission loss. Especially in a case where a long submarine cable is required, transmission loss tends to increase in the alternate current transmission, and thus it is considered that the direct current transmission is suitable. This is because a submarine cable generally includes a conductive body surrounded by a relatively thin layer of an electrically insulating material and a conductive sheath, and has a high electrostatic capacity.

A wind power generation facility employing direct current transmission is connected to a grid via a high voltage direct current (HVDC) system. The HVDC system includes a sending end converter (SEC) disposed on the wind power generating facility and a receiving end converter (REC) disposed on the grid. A direct current transmission channel is provided between the SEC and the REC. The SEC converts the alternate current from the wind power generation facility into direct current, and supplies the direct current to the REC via the direct current transmission channel. The REC converts the direct current received from the SEC via the direct current transmission channel into alternate current, and supplies the alternate current to the grid.

Patent Document 2 and Non-patent Document 1 disclose FRT technologies for a wind power generation facility or a wind turbine generator employing direct current transmission.

Specifically, Patent Document 2 (FIG. 20 and line 21 to 30 on page 31) discloses reducing energy received from wind by pitch control of each wind turbine generator upon system malfunction, in a wind farm connected to a grid via an HVDC system. Further, Patent Document 2 also discloses changing frequency of a fixed-speed induction generator of each wind turbine generator by changing frequency of a generator grid with the HDVC system to improve power generation efficiency, for instance.

Furthermore, Non-patent Document 1 discloses, in a wind turbine generator connected to a grid via an HDVC system, reducing active power outputted from the wind turbine generator by adjusting slip of a DFIG induction generator by changing frequency of an SEC upon system malfunction.

Citation List

Patent Literature

 Patent Document 1: EP 2270331A

Patent Document 2: WO 2009/082326A

EP2258184 discloses a method and apparatus for controlling a DC-transmission link.

Non-patent Document 1: Christian Feltes, et al.," Enhanced Fault Ride-Through Method for Wind Farms Connected to the Grid Through VSC-Based HVDC Transmission", IEEE TRANSACTIONS ON POWER SYSTEMS, 2009. 8, VOL.24, NO.3, p. 1537-1546

SUMMARY

Technical Problem

However, in the FRT technology described in Patent Document 1, excessive energy that is a few to tens % of the power generated by the entire wind farm needs to be dissipated by an electric resistor, and thus an electric resistor having a large capacity needs to be provided, which results in cost increase.

Further, the method described in Patent Document 2 is not sufficient as an FRT technique which is required to response in an extremely short time after occurrence of system malfunction, because the response speed of the pitch control is relatively slow.

Moreover, the method described in Non-patent Document 1 utilizes the characteristic of an induction generator that active power depends on slip. Since a synchronous generator does not have slip, this method cannot be applied to a wind power generation facility including wind turbine generators equipped with synchronous generators.

An object of at least one embodiment of the present invention is to provide a wind power generation facility and a method for operating the same, and a wind farm control device, the wind power generation facility including a wind farm which includes a plurality of wind turbine generators each having a synchronous generator, and further including an FRT function used upon system malfunction at low cost.

Solution to Problem

A wind power generation facility according to at least one embodiment of the present invention includes: a wind farm including a plurality of wind turbine generators each of which includes a synchronous generator; a local grid to which the wind farm is connected; a direct-current transmission channel disposed between the local grid and a grid; a sending end converter for converting alternate current from the local grid into direct current and supplying the direct current to the direct-current transmission channel; a receiving end converter for converting the direct current from the direct-current transmission channel into alternate current and supplying the alternate current to the grid; an abnormality detection part for detecting an abnormal event of the grid; and a first WF controller for controlling the sending end converter and adjusting a local-grid voltage phase of the local grid so as to reduce a load angle which indicates a difference between a generator voltage phase of the synchronous generator of each wind turbine generator and the local-grid voltage phase, when the abnormal event of the grid is detected by the abnormality detection part.

With the above wind power generation facility, when an abnormal event of the grid is detected by the abnormality detection part, the sending end converter adjusts the local grid voltage phase under control of the first WF controller, so that the load angle of the synchronous generator of each wind turbine generator is reduced. In this way, the power generation output (active power) of each wind turbine generator of the wind farm is reduced collectively and quickly by the control of the sending end converter, which makes it possible to recover the excess of active power generated from the wind farm with respect to the active power that can be supplied to the grid from the sending end converter. Further, it is unnecessary to provide a component for dissipating excessive energy, such as an electric resistor.

Thus, it is possible to achieve an FRT function for system malfunction at low cost.

In some embodiments, the first WF controller is configured to obtain a target local-grid voltage phase such that a sum of a square of a difference between the target local-grid voltage phase and the generator voltage phase of each wind turbine generator is a minimum, and to control the sending end converter so that the local-grid voltage phase becomes the target local-grid voltage phase.

In this way, it is possible to effectively reduce the active power generated by the entire wind farm. Further, the generator voltage phases are varied in accordance with the power generation output of each wind turbine power generator. Thus, if the target local-grid voltage phase is obtained so that the sum of a square of a difference between the target local-grid voltage phase and the generator voltage phase of each wind turbine generator is the minimum, a part of the synchronous generators have a negative load angle. The partial synchronous generators with a negative load angle temporarily function as a motor so as to receive active power from the other wind turbine generators and consume this active power. Thus, it is possible to effectively recover the excess of the active power generated by the wind farm with respect to active power that can be supplied from the sending end converter toward the grid.

In some embodiments, the first WF controller is configured to select a minimum phase of the generator voltage phases of the wind turbine generators as a target local-grid voltage phase, and to control the sending end converter so that the local-grid voltage phase becomes the target local-grid voltage phase.

In this way, it possible to set the load angles of all synchronous generators to zero or more, and to prevent the synchronous generators from functioning as a motor even temporarily. Thus, the above configuration of the first WF controller is suitable for a case in which a load applied to the drivetrain of a wind turbine generator due to motoring operation of a synchronous generator is to be avoided.

In some embodiments, each wind turbine generator includes a hydraulic pump for generating pressurized oil by being driven by wind energy, a hydraulic motor for inputting mechanical energy to the corresponding synchronous generator by being driven by the pressurized oil, and a motor control part for controlling displacement of the hydraulic motor of the wind turbine generator. The wind power generation facility further includes a second WF controller configured to transmit a command value of the displacement to each motor control part so that the mechanical energy of the hydraulic motor of each wind turbine generator is reduced, when the abnormal event of the grid is detected by the abnormality detection part.

In this way, upon malfunction of the system, it is possible to quickly reduce mechanical energy inputted from the hydraulic motors to the synchronous generators, and to restrict acceleration of rotors of the synchronous generators due to mismatch of the mechanical energy and the power generation output of the synchronous generators.

In some embodiments, the second WF controller is configured to determine an amount of reduction by which the mechanical energy is reduced for each wind turbine generator based on individual information of the corresponding wind turbine generator, and to transmit the command value to the hydraulic motor of each wind turbine generator based on the corresponding amount of reduction.

In this way, the load angle of the synchronous generator of each wind turbine generator is controlled individually and precisely taking account of individual information of each wind turbine generator, which makes it possible to effectively reduce electrical stress on the synchronous generator and mechanical stress on the drivetrain including the hydraulic pump and the hydraulic motor.

In one embodiment, the second WF controller is configured to limit the load angle within a range not less than zero radian for a wind turbine generator in which a rotor rotation speed has reached a rated rotation speed, and to allow the load angle to be in a range less than zero radian for other wind turbine generators, from among the plurality of wind turbine generators.

In this way, the synchronous generator of a wind turbine generator which is receiving relatively weak wind and in which the rotation speed of the rotor has not reached the rated rotation speed is temporarily operated to function as a motor, which makes it possible to consume active power from other wind turbine generators. As a result, it is possible to effectively reduce the excess of the active power generated by the wind farm with respect to the active power that can be supplied from the SEC toward the grid.

In some embodiments, each wind turbine generator of the wind farm further includes an exciter for supplying field current to field winding of the corresponding synchronous generator, and an exciter control part for controlling the exciter of each wind turbine generator so that the field current increases immediately after the abnormal event of the grid is detected by the abnormality detection part.

The generator terminal voltage of the synchronous generators decreases in an instant immediately after occurrence of an abnormal event to the grid, followed by an instant decrease of electrical output (active power) of the generators. Thus, mechanical input from the hydraulic motors becomes excessive with respect to the electrical output of the generators, and the rotors of the synchronous generators are accelerated, which may cause the synchronous generators to step out. Thus, immediately after occurrence of a system fault, the field current is increased, so that the generator inner induction voltage increases and the electrical output of the generators rises. As a result, the synchronizing power of the synchronous generators is increased, so that the first-wave power swing of the synchronous generators after occurrence of an abnormal event is restricted, and the transient stability is improved. Step out of the synchronous generator is accordingly prevented.

The control for the exciter for improving the above transient stability can be performed suitably by excitation in which the response speed is extremely high, which is referred to as super-quick response excitation (e.g. thyristor excitation).

A method of operating a wind power generation facility according to at least one embodiment of the present invention is for a wind power generation facility which includes: a plurality of wind turbine generators each of which includes a synchronous generator; a local grid to which the wind farm is connected; a direct-current transmission channel disposed between the local grid and a grid; a sending end converter for converting alternate current from the local grid into direct current and supplying the direct current to the direct-current transmission channel; and a receiving end converter for converting the direct current from the direct-current transmission channel into alternate current and supplying the alternate current to the grid. The method includes a detection step of detecting an abnormal event of the grid; and a converter control step of controlling the sending end converter so as to reduce a load angle which indicates a difference between a generator voltage phase of the synchronous generator of each wind turbine generator and a local-grid voltage phase of the local grid, when the abnormal event is detected in the detection step.

With the above method of operating a wind power generation facility, when an abnormal event of the grid is detected in the detection step, the sending end converter adjusts the local grid voltage phase, so that the load angle of the synchronous generator of each wind turbine generator is reduced. In this way, the power generation output (active power) of each wind turbine generator of the wind farm is reduced collectively and quickly by the control of the sending end converter, which makes it possible to recover the excess of active power generated by the wind farm with respect to the active power that can be supplied to the grid from the sending end converter. Further, it is unnecessary to provide a component for dissipating excessive energy, such as an electric resistor.

Thus, it is possible to achieve an FRT function for system malfunction at low cost.

In some embodiments, in the converter control step, a target local-grid voltage phase is obtained such that a sum of a square of a difference between the target local-grid voltage phase and the generator voltage phase of each wind turbine generator is a minimum, and the sending end converter is controlled so that the local-grid voltage phase becomes the target local-grid voltage phase.

In this way, it is possible to effectively reduce the active power generated by the entire wind farm. Further, a part of the synchronous generators each having a negative load angle temporarily functions as a motor so as to receive active power from the other wind synchronous generators to consume this active power. Thus, it is possible to effectively recover the excess of the active power generated by the wind farm with respect to active power that can be applied from the sending end converter toward the grid.

In some embodiments, in the converter control step, a minimum phase of the generator voltage phases of the wind turbine generators is selected as a target local-grid voltage phase, and the sending end converter is controlled so that the local-grid voltage phase becomes the target local-grid voltage phase.

In this way, it possible to set the load angles of all synchronous generators to zero or more, and to prevent the synchronous generators from functioning as a motor even temporarily. Thus, the above described converter control step is suitable for a case in which a load applied to the drivetrain of a wind turbine generator due to motoring operation of the synchronous generator is to be avoided.

In some embodiments, each wind turbine generator includes a hydraulic pump for generating pressurized oil by being driven by wind energy, a hydraulic motor for inputting mechanical energy to the corresponding synchronous generator by being driven by the pressurized oil, and a motor control part for controlling displacement of the hydraulic motor of the wind turbine generator, and the method further includes a motor command step of transmitting a command value of the displacement to each motor control part so that the mechanical energy of the hydraulic motor of each wind turbine generator is reduced, when the abnormal event is detected in the detection step.

In this way, upon malfunction of the system, it is possible to quickly reduce mechanical energy inputted from the hydraulic motors to the synchronous generators, and to restrict acceleration of rotors of the synchronous generators due to mismatch of the mechanical energy and the power generation output of the synchronous generators.

In some embodiments, in the motor command step, an amount of reduction by which the mechanical energy is reduced is determined for each wind turbine generator based on individual information of the corresponding wind turbine generator, and the command value is transmitted to the hydraulic motor of each wind turbine generator based on the corresponding amount of reduction.

In this way, the load angle of the synchronous generator of each wind turbine generator is controlled individually and precisely taking account of individual information of each wind turbine generator, which makes it possible to effectively reduce electrical stress on the synchronous generator and mechanical stress on the drivetrain including the hydraulic pump and the hydraulic motor.

In one embodiment, in the motor command step, the load angle is limited within a range not less than zero radian for a wind turbine generator in which a rotor rotation speed has reached a rated rotation speed, and the load angle is allowed to be in a range less than zero radian for other wind turbine generators, from among the plurality of wind turbine generators.

In this way, the synchronous generator of a wind turbine generator, which is receiving relatively weak wind and in which the rotation speed of the rotor has not reached the rated rotation speed, is temporarily operated to function as a motor, which makes it possible to consume active power from other wind turbine generators. As a result, it is possible to effectively recover the excess of the active power generated by the wind farm with respect to the active power that can be supplied from the SEC toward the grid.

In some embodiments, each wind turbine generator of the wind farm further includes an exciter for supplying field current to field winding of the corresponding synchronous generator, and the method further includes an exciter control step of controlling the exciter of each wind turbine generator so that the field current increases immediately after the abnormal event is detected in the detection step.

In this way, the synchronizing power of the synchronous generators is increased in accordance with the increase in the field current, so that the first-wave power swing of the synchronous generators after occurrence of an abnormal event is restricted, and the transient stability is improved. Step out of the synchronous generators is accordingly prevented.

Further, a control device for a wind farm according to at least one embodiment of the present invention is for a wind farm including a plurality of wind turbine generators each of which includes a synchronous generator, the wind farm being connected to a local grid connected to a grid via a sending end converter, a direct-current transmission channel and a receiving end converter included in the wind power generation facility. The control device includes a first WF controller for controlling the sending end converter and adjusting a local-grid voltage phase of the local grid so as to reduce a load angle which indicates a difference between a generator voltage phase of the synchronous generator of each wind turbine generator and the local-grid voltage phase, when the abnormal event of the grid is detected.

With the above control device for a wind power generation facility, when an abnormal event of the grid is detected, the sending end converter adjusts the local grid voltage phase under control of the first WF controller, so that the load angle of the synchronous generator of each wind turbine generator is reduced. In this way, the power generation output (active power) of each wind turbine generator of the wind farm is reduced collectively and quickly by the control of the sending end converter, which makes it possible to recover the excess of active power generated from the wind farm with respect to the active power that can be supplied toward the grid from the sending end converter. Further, it is unnecessary to provide a component for dissipating excessive energy, such as an electric resistor.

Thus, it is possible to achieve an FRT function for system malfunction at low cost.

Advantageous Effects

According to at least one embodiment of the present invention, when an abnormal event of the grid is detected, the sending end converter is controlled to adjust the local-grid voltage phase, so that the load angle of the synchronous generator of each wind turbine generator is reduced. In this way, the power generation output (active power) of each wind turbine generator of the wind farm is reduced collectively and quickly by the control of the sending end converter, which makes it possible to recover the excess of active power generated from the wind farm with respect to the active power that can be supplied toward the grid from the sending end converter. Further, it is unnecessary to provide a component for dissipating excessive energy, such as an electric resistor.

Thus, it is possible to achieve an FRT function for system malfunction at low cost.

BRIEF DESCRIPTION OF DRAWINGS

FIG. 1 is a diagram of an overall configuration of a wind power generation facility according to one embodiment.

FIG. 2 is a block diagram illustrating a control logic of the first WF controller according to one embodiment.

FIGs. 3A to 3C are diagrams illustrating principles for determining a target local-grid voltage phase $D_{SEC\_tgt}$ in a target phase determination part, according to one embodiment. FIG. 3A is a vector diagram of normal operation in which an abnormal event has not occurred to the grid. FIGs. 3B and 3C are vector diagrams after an abnormal event has occurred to the grid.

FIG. 4 is a graph of an exemplary relationship between active power $P_e$ and a load angle D before and after occurrence of an abnormal event to the grid.

FIG. 5 is a block diagram illustrating a control logic of the second WF controller according to one embodiment.

FIG. 6 is a diagram of an influence of the control of the second WF controller according to the embodiment on the balance between electric output $P_e$ of a synchronous generator and mechanical input $P_m$ of a hydraulic motor.

FIG. 7 is a diagram illustrating individual information of each wind turbine generator.

FIG. 8 is a flowchart of a process of an operation method of a wind power generation facility according to one embodiment.

DETAILED DESCRIPTION

Embodiments of the present invention will now be described in detail with reference to the accompanying drawings. It is intended, however, that unless particularly specified, dimensions, materials, shapes, relative positions and the like of components described in the embodiments shall be interpreted as illustrative only and not limitative of the scope of the present invention.

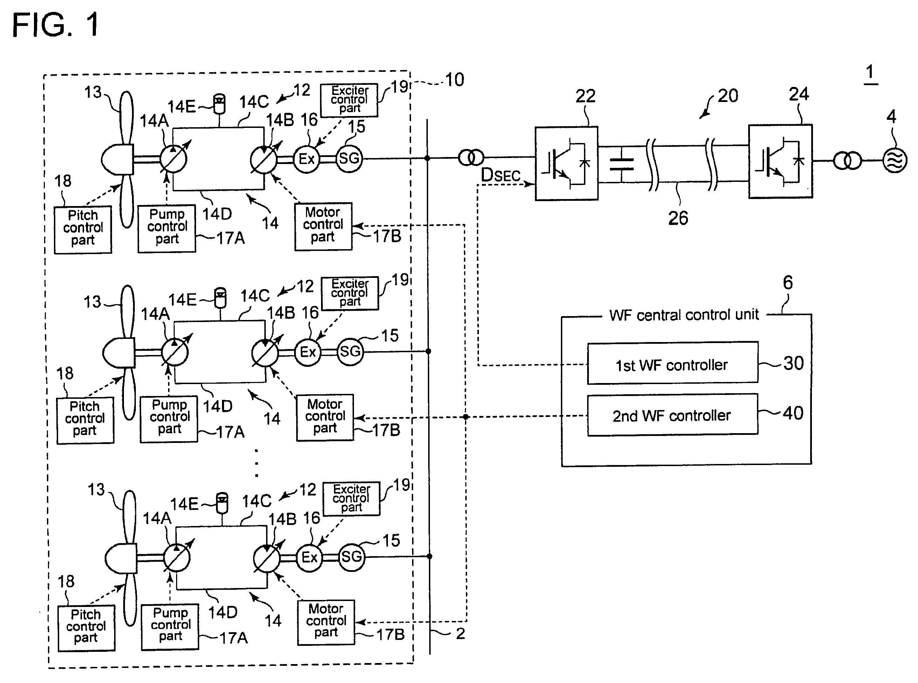

FIG. 1 is a diagram of an overall configuration of a wind power generation facility according to one embodiment.

As illustrated in the drawing, a wind power generation facility 1 includes a wind farm 10 including a plurality of wind turbine generators 12, a local grid 2 to which the wind farm 10 is connected, and an HVDC 20 disposed between the local grid 2 and a grid 4.

Each wind turbine generator 12 of the wind farm 10 includes a rotor 13 which rotates upon receiving wind, a drivetrain 14 connected to the rotor 13, and a synchronous generator 15 which converts rotation energy of the rotor 13 transmitted via the drivetrain 14 into electric energy. The rotor 13 includes blades whose pitch angles can be adjusted by a pitch control mechanism that operates under control of a pitch control unit 18.

In some embodiments, as illustrated in FIG. 1, each drivetrain 14 includes a variable-displacement hydraulic pump 14 driven by the rotor 13, and a variable-displacement hydraulic motor 14B driven by pressurized oil generated in the hydraulic pump 14A. The hydraulic pump 14A and the hydraulic motor 14B are connected to each other via a high pressure oil line 14C and a low pressure oil line 14D. Thus, the working oil (high pressure oil) discharged from the hydraulic pump 14A is supplied to the hydraulic motor 14B via the high pressure oil line 14C, and the working oil (low pressure oil) after having performed work in the hydraulic motor 14B is returned to the hydraulic pump 14A via the low pressure oil line 14D. Here, an oil tank storing working oil may be connected to the low pressure oil line 14D. In one embodiment, an accumulator 14E is connected to the high pressure oil line 14C. The accumulator 14E has functions such as preventing pulsation of the high pressure oil line 14C, accumulating high pressure oil generated in the hydraulic pump 14A, and absorbing a difference between the discharge rate of the hydraulic pump 14A and the suction rate of the hydraulic motor 14B. Further, in one embodiment, the wind turbine generator 12 further includes an exciter 16 for supplying field current to field winding of the synchronous generator 15. Here, the displacements of the hydraulic pump 14A and the hydraulic motor 14B are respectively controlled by a pump control part 17A and a motor control part 17B.

In another embodiment, the drivetrain 14 includes a gearbox disposed between the rotor 13 and the generator 15.

The HVDC 20 includes a sending end converter (SEC) 22 for converting alternate current from the local grid 2 into direct current, a receiving end converter (REC) 24 for converting the direct current received from the SEC 22 into alternate current and supplying the alternate current to the grid 4, and a direct current transmission channel 26 disposed between the SEC 22 and the REC 24.

In some embodiments, the wind farm 10 and the SEC 22 are disposed on the ocean, and the grid 4 and the REC 24 are disposed on the ground. In this case, a substantial part of the direct current transmission channel 26 is a submarine cable disposed on sea bottom.

The wind power generation facility 1 connected to the grid 4 needs to satisfy the requirements specified in a grid code. For instance, a Fault Ride Through (FRT) regulation requires that interconnection of the power generation facility 1 to the grid 4 be maintained as long as a decrease in voltage or duration of the voltage decrease is within a predetermined range even in the event of, for instance, a system fault such as a short circuit and a grounding fault.

At this time, the wind power generation facility 1 is affected as follows. First, occurrence of an abnormal event to the grid 4 decreases active power that can be transmitted to the grid 4 from the HVDC 20. As a result, active power supplied to the HVDC 20 from the wind farm 10 becomes excessive immediately after occurrence of the abnormal event to the grid 4, and the imbalanced demand and supply of power in the direct current transmission channel 26 causes the voltage of the direct current transmission channel 26 to rise, which may damage the SEC 22 and the REC 24. Thus, it is desirable to quickly reduce the active power supplied to the HVDC 20 from the wind farm 10 to restrict the voltage rise in the direct current transmission channel 26.

In this regard, in some embodiments, the SEC 22 is controlled to restrict the output of the active power from the wind farm 10 upon occurrence of an abnormal event to the grid 4.

In the exemplary embodiment illustrated in FIG. 1, the wind power generation facility 1 includes a wind farm central control unit (WF central control unit) 6, and the first WF controller 30 included in the WF central control unit 6 controls the SEC 22 to restrict output of the active power from the wind farm 1.

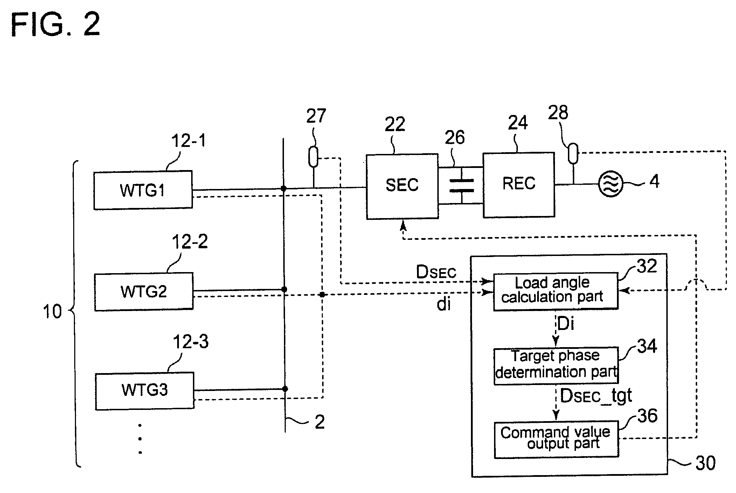

FIG. 2 is a block diagram illustrating a control logic of the first WF controller 30 according to one embodiment.

As illustrated in the drawing, the first WF controller 30 includes a load-angle calculation part 32 for calculating a load angle of the synchronous generator 15 of each wind turbine generator 12, a target phase determination part 34 for determining a target local-grid voltage phase of the local grid 2, and a command-value output part 36 for outputting a command value to the SEC 22 based on the target local-grid voltage phase.

The load-angle calculation part 32 receives a detection result of an abnormal event of the grid 4 from an abnormality detection part 28, obtains a generator voltage phase angle $d_i$ of the synchronous generator 15 of each wind turbine generator 12-i (i is an integer not less than two) from the wind farm 10, and then obtains a local-grid voltage phase angle $D_{SEC}$ of the local grid 2 from a detector 27. Then, the load-angle calculation part 32 calculates the load angle $D_i$ (= $d_i$ - $D_{SEC}$), which is a degree angle of the generator voltage phase angle $d_i$ with respect to the local-grid voltage phase angle $D_{SEC}$. Here, the load angle $D_i$ is calculated for each of the wind turbine generator 12-i, because the load angles $D_i$ vary in accordance with the power outputs of the respective wind turbine generators 12-i.

The target phase determination part 34 obtains a target local-grid voltage phase $D_{SEC\_tgt}$ of the local grid 2 based on the load angle $D_i$ received from the load-angle calculation part 32. The target local-grid voltage phase $D_{SEC\_tgt}$ is determined so that the load angle $D_i$ related to each wind turbine generator 12-i is small.

The command value output part 36 transmits a command value (for instance, a PWM signal as a command value) to the SEC 22 so that the target local-grid voltage phase $D_{SEC\_tgt}$ is achieved. The SEC 22 adjusts the voltage phase of the local grid 2 to the target local grid voltage phase $D_{SEC\_tgt}$ in accordance with the command value transmitted from the command value output part 36.

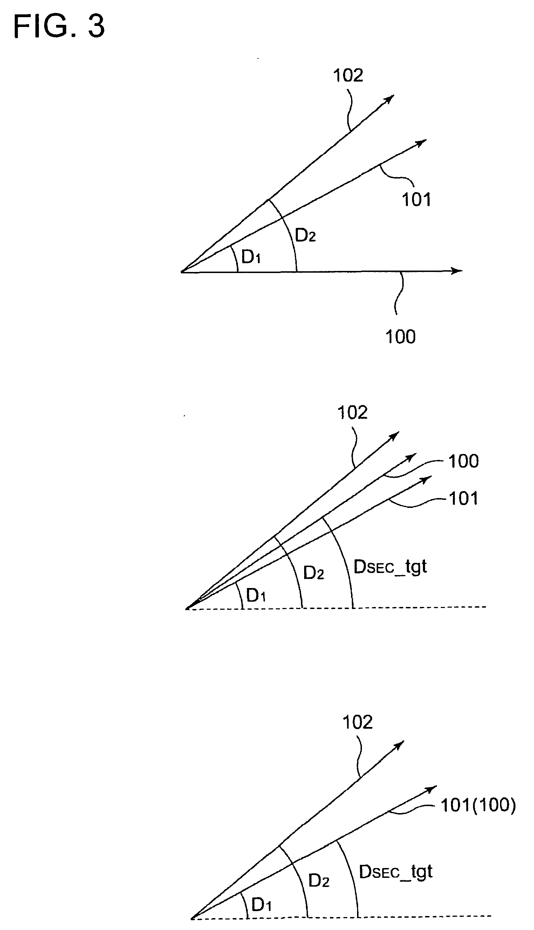

FIGs. 3A to 3C are diagrams illustrating principles for determining a target local-grid voltage phase $D_{SEC\_tgt}$ in the target phase determination part 34. FIG. 3A is a vector diagram of normal operation in which an abnormal event has not occurred to the grid 4. FIGs. 3B and 3C are vector diagrams after an abnormal event has occurred to the grid 4.

Here, FIGs. 3A to 3C describe a case in which the wind farm 10 includes two wind turbine generators 12-1, 12-2. A target local grid voltage phase $D_{SEC\_tgt}$ can be determined based on a similar principle also in a case where the wind farm 10 includes three or more wind turbine generators.

As illustrated in FIG. 3A, during normal operation, the vectors 101, 102 representing the generator voltages of the synchronous generators 15 of the wind turbine generators 12-1, 12-2 respectively have phase angles $D_1$ and $D_2$ with respect to the vector 100 representing the local-grid voltage of the local grid 2. The above indicates that the synchronous generators 15 of the wind turbine generators 12-1, 12-2 are operated at a synchronous speed at phases advanced from the voltage phase of the local grid 2 by the load angles $D_1$ and $D_2$.

It is known that active power outputted from a synchronous generator is proportional to a sine function of a load angle. Thus, in a range where the load angles $D_1$, $D_2$ are small, it is possible to consider that active power from the synchronous generator 15 of each of the respective wind turbine generators 12-1, 12-2 is proportional to corresponding one of the load angles $D_1$, $D_2$.

In consequence, if the target phase determination part 34 sets the target local grid voltage phase $D_{SEC\_tgt}$ close to the load angles $D_1$, $D_2$, the load angles of the respective wind turbine generators 12-1, 12-2 are reduced by the control of the SEC 22, which makes it possible to restrict the active power outputted from the synchronous generators 15.

In one embodiment, as illustrated in FIG. 3B, the target local-grid voltage phase $D_{SEC\_tgt}$ is set between the maximum load angle $D_1$ and the minimum load angle $D_2$ of the load angles ($D_1$, $D_2$) related to all of the wind turbine generators 12-1, 12-2.

For instance, the target local-grid voltage phase $D_{SEC\_tgt}$ may be set such that the sum of squares of differences between the target local-grid voltage phase $D_{SEC\_tgt}$ and the generator voltage phase angles $d_1$, $d_2$ of the respective wind turbine generators 12-1, 12-2 is the minimum. That is, the target local grid voltage phase $D_{SEC\_tgt}$ may be set such that the evaluation function J specified in the following expression is the minimum:

$$\text{Evaluation function} \quad J = \sum_{i=1}^{N} \left( d_i - D_{SEC\_tgt} \right)^2$$

(N is a total number of wind turbine generators 12 that belong to the wind farm 10).

If the target local-grid voltage phase $D_{SEC\_tgt}$ is set by the above method, the SEC 22 is controlled so that the load angles of the synchronous generators 15 of the respective wind turbine generators 12-1, 12-2 become small, which restricts output of the active power from the wind farm 10. Here, in the above method, the synchronous generators 15 of a part of the wind turbine generators (in the example illustrated in FIG. 3B, the wind turbine generator 12-1) each has a negative load angle and temporarily functions as a motor, and receives active power from the synchronous generators 15 of the other wind turbine generators (in the example illustrated in FIG. 3B, the wind turbine generator 12-2) to consume this active power. Thus, it is possible to effectively recover the excess of the active power outputted from the wind farm 10 with respect to the active power that can be received by the grid 4 from the SEC.

In another embodiment, as illustrated in FIG. 3C, the minimum load angle $D_2$ of the load angles ($D_1$, $D_2$) related to all of the wind turbine generators 12-1, 12-2 is selected, and the target local-grid voltage phase $D_{SEC\_tgt}$ is set to the minimum load angle $D_2$.

If the target local-grid voltage phase $D_{SEC\_tgt}$ is set by the above method, the SEC 22 is controlled so that the load angles of the synchronous generators 15 of the respective wind turbine generators 12-1, 12-2 become small, which restricts output of the active power from the wind farm 10. Further, in the above method, the load angles of the synchronous generators 15 of all of the wind turbine generators 12-1, 12-2 are maintained to be zero or more, which makes it possible to prevent the synchronous generators 15 from functioning as a motor even temporarily. Thus, the above method is suitable for a case in which a load applied to the drivetrain 14 of a wind turbine generator due to motoring operation of a synchronous generator is to be avoided.

Meanwhile, when an abnormal event occurs to the grid 4, the active power outputted from each synchronous generator 15 decreases rapidly in accordance with a decrease in the terminal voltage of the synchronous generator 15. Thus, mechanical input from the hydraulic motor 14B exceeds electrical output of the synchronous generator 15, which may accelerate the rotor of the synchronous generator 15. Further, in a case where the active power outputted from the wind farm 10 is restricted by the control of the first WF controller 30 as described above, the mechanical input from the hydraulic motor 14B becomes even more excessive as compared to the electrical output of the synchronous generator 15, so that the rotor of the synchronous generator 15 is likely to be accelerated.

Now, described below in detail is the acceleration phenomenon of the rotor of the synchronous generator 15 accompanying the occurrence of an abnormal event to the grid 4.

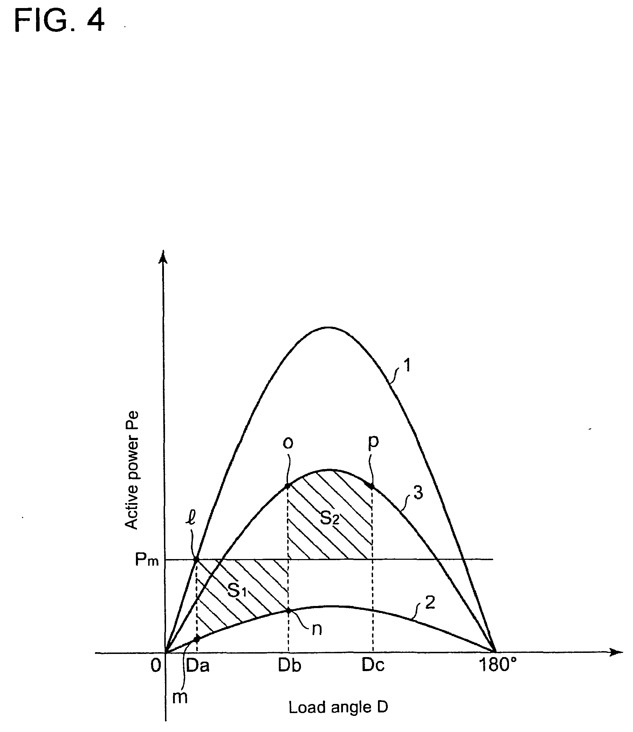

FIG. 4 is a graph of an exemplary relationship between active power $P_e$ and a load angle D before and after occurrence of an abnormal event to the grid 4.

When an abnormal event occurs to the grid 4, the terminal voltage of the synchronous generators 15 rapidly decreases, and the active power $P_e$ outputted from the synchronous generators 15 also rapidly decreases (state 1 to state 2 in FIG. 4). The grid 4 may include a plurality of lines to restrict influence of a fault such as a short circuit and a grounding fault to minimum, in case of which the abnormal event of the grid 4 is cancelled by shutting off the line at which the fault has occurred. After the abnormal event in the grid 4 is cancelled, the active power $P_e$ outputted from the synchronous generators 15 recovers (state 3). However, a part of the lines where the fault has occurred is still shut off and the power is transmitted via the other lines. Thus, the power output from the synchronous generators 15 does not recover to the level (state 1) before occurrence of the short-circuit fault.

Before the abnormal event occurs, each synchronous generator 15 is operated at point "1" on the $P_e$-D curve in state 1. At this time, the load angle D is $D_a$. Point "1" is an intersection of the mechanical input $P_m$ from the hydraulic motor 14B and the $P_e$-D curve in state 1. If the load angle D should deviate from $D_a$ even slightly, synchronizing power dP / dD, which would return the load angle D to $D_a$, is applied, and thus the load angle D is stable at $D_a$.

However, when an abnormal event occurs to the grid 4, the $P_e$-D curve of the synchronous generator 15 decreases from state 1 to state 2 in an instant. On the other hand, the load angle D stays at $D_a$ due to the inertia of the rotor of the synchronous generator 15 immediately after occurrence of the short-circuit fault. Thus, due to occurrence of an abnormal event, the operation point of the synchronous generator 15 shifts from point "1" to point "m" in an instant. Then, the mechanical input $P_m$ from the hydraulic motor 14B becomes excessive with respect to the electrical output $P_e$ from the synchronous generator 15, which accelerates the rotor of the synchronous generator 15, so that the operation point of the synchronous generator 15 shifts from point "m" to point "n". As a result, the load angle increases from $D_a$ to $D_b$.

When the load angle D reaches $D_b$, the line on which the abnormal event has occurred is shut off, so that the abnormal event is canceled. As a result, the $P_e$-D curve of the synchronous generator 15 increases from state 2 to state 3 in an instant. On the other hand, the load angle D stays at $D_b$ due to inertia of the rotor of the synchronous generator 15 immediately after cancellation of the abnormal event. Thus, as a result of cancellation of the abnormal event, the operation point of the synchronous generator 15 shifts from point "n" to point "o" in an instant. Accordingly, the electrical output $P_e$ of the synchronous generator 15 exceeds the mechanical input $P_m$ from the hydraulic motor 14B, and the rotor of the synchronous generator 15 starts to decelerate. Thus, the load angle D starts to decrease after reaching $D_c$ and the load angle subsequently repeats increase and decrease to vibrate, finally damped by damping force of the synchronous generator 15 to become stable.

Further, point p, which is a turndown point of the load angle D, is an operation point at which acceleration energy matches deceleration energy. The acceleration energy is represented by area $S_1$ defined by the input $P_m$ from the hydraulic motor 14B and the $P_e$-D curve in state 2. The deceleration energy is represented by area $S_2$ defined by the output $P_m$ from the hydraulic motor 14 and the $P_e$-D curve in state 3.

As described above, the rotors of the synchronous generators 15 may be accelerated in accordance with occurrence of an abnormal event to the grid 4. When the rotors of the synchronous generators 15 are accelerated, the load angles of the synchronous generators 15 rise and finally exceed the stability limit to cause the synchronous generators 15 to step out. Thus, when an abnormal event occurs to the grid 4, the mechanical input to the generator 15 from the hydraulic motor 14B of each wind turbine generator 12 may be restricted.

In some embodiments, as illustrated in FIG. 1, the second WF controller included in the WF central control unit 6 transmits a command value of displacement of the hydraulic motor 14B to the motor control part 17B, so that the mechanical input (mechanical energy) from the hydraulic motor 14B is reduced.

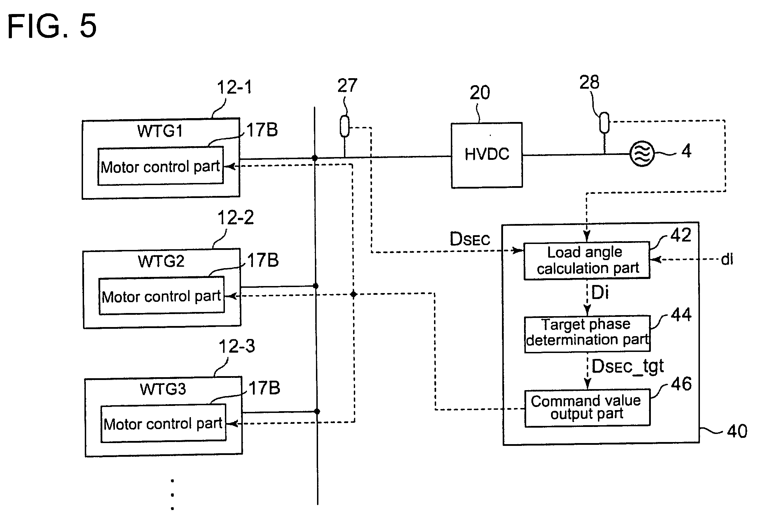

FIG. 5 is a block diagram illustrating a control logic of the second WF controller 40 according to one embodiment.

As illustrated in the drawing, the second WF controller 40 includes a load-angle calculation part 42 for calculating a load angle of the synchronous generator 15 of each wind turbine generator 12, a target load angle determination part 44 for determining a target load angle related to each wind turbine generator 12, and a command-value output part 46 for outputting a command value to the motor control part 17B based on the target load angle.

The load-angle calculation part 42 receives a detection result of the abnormal event of the grid 4 from an abnormality detection part 28, obtains a generator voltage phase angle $d_i$ of the synchronous generator 15 of each wind turbine generator 12-i (i is an integer not less than two and not more than N, and N is the total number of wind turbine generators 12 that belong to the wind farm 10) from the wind farm 10, and then obtains a local-grid voltage phase angle $D_{SEC}$ of the local grid 2 from a detector 27. Then, the load-angle calculation part 42 calculates the load angle $D_i$ (= $d_i$ - $D_{SEC}$), which is a degree angle difference of the generator voltage phase angle $d_i$ with respect to the local grid voltage phase angle $D_{SEC}$. Here, the load-angle calculation part 42 has a similar function as that of the load-angle calculation part 32 of the first WF controller 30, and thus the load-angle calculation part 42 may be used as the load-angle calculation part 32 as well.

The target load-angle determination part 44 determines a target load angle $D_{i\_tgt}$ related to each wind turbine generator 12-i based on the load angle $D_i$ received from the load angle calculation part 42 and individual information of each wind turbine generator 12-i received from the wind farm 10. Here, individual information of each wind turbine generator 12-i includes at least one of the wind velocity, the pitch angle of blades of the rotor 13, the rotation speed of the rotor 13, the pressure of the accumulator 14E, the power generation output, the reactive power, the power factor, or the power loss of the feeder cable.

The command value output part 46 transmits a command value of displacement of the hydraulic motor 14B to the motor control part 17B of each wind turbine generator 12-i so that the target load angle $D_{i\_tgt}$ is achieved for each wind turbine generator 12-i. The motor control part 17B adjusts the displacement of the hydraulic motor 14B in accordance with a command value from the command value output part 46.

In another embodiment, the second WF controller 40 includes a target mechanical-input determination part, instead of the target load-angle determination part 44. The target mechanical-input determination part determines target mechanical-input $P_{m\_tgt}$ based on the individual information of each wind turbine generator 12-i obtained from the wind farm 10 and the terminal voltage and inner induction voltage of each synchronous generator 15. Here, the target mechanical-input $P_{m\_tgt}$ is set to a value smaller than the mechanical input $P_m$ before occurrence of an abnormal event to the grid 4. The command value output part 46 determines a command value of displacement of the hydraulic motor 14B to the motor control part 17B of each wind turbine generator 12-i so that the target mechanical-input $P_{m\_tgt}$ is achieved. For instance, the command value output part 46 may determine a command value of displacement of the hydraulic motor 14B by dividing the target mechanical input (target mechanical energy) $P_{m\_tgt}$ by the rotation speed of the hydraulic motor 14B and the pressure $P_H$ of the high pressure oil line 14C. The motor control part 17B of each wind turbine generator 12-i adjusts the displacement of the hydraulic motor 14B in accordance with the command value from the command value output part 46.

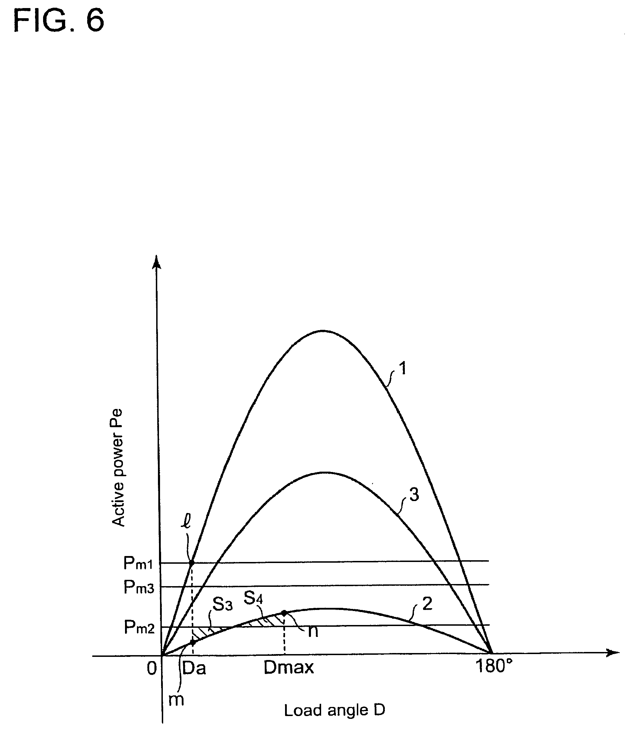

FIG. 6 is a diagram of an influence of the control of the second WF controller 40 according to the embodiment on the balance between electric output $P_e$ of each synchronous generator 15 and mechanical input $P_m$ of the hydraulic motor 14B. FIG. 6 illustrates a case in which the $P_e$-D curve shifts from state 1 to state 2 due to occurrence of an abnormal event to the grid 4, and then to state 3 due to cancellation of an abnormal event of the grid 4, similarly to FIG. 4. Here, the change of the $P_e$-D curve from state 1 to 3 illustrated in FIG. 6 can be detected from the terminal voltage and inner induction voltage of each synchronous generator 15.

In one embodiment, when the abnormality detection part 28 detects an abnormal event in the grid 4, the $P_e$-D curve decreases from state 1 to state 2 in an instant, so that the operation point of the synchronous generator 15 shifts from point "1" to point "m" and the load angle D begins to increase from $D_a$ in accordance with acceleration of the rotor of the synchronous generator 15. Then, the target load angle determination part 44 sets the target load angle $D_{i\_tgt}$, and the command value output part 46 immediately transmits to the motor control part 17B a command value of displacement of the hydraulic motor 14B for achieving new mechanical input $P_{m2}$ that possibly restricts the load angle D of the synchronous generator 15 to the target load angle $D_{i\_tgt}$. In this way, it is possible to reduce the acceleration energy $S_3$ and increase the deceleration energy $S_4$, so as to move point "n", which is the turndown point of the load angle D, closer to point "m", and to reduce the maximum value $D_{max}$ of the load angle D of the synchronous generator 15 at the time when the $P_e$-D curve is in state 2. Further, once the $P_e$-D curve recovers from state 2 to state 3 due to shutoff of the line on which the abnormal event has occurred, the target load-angle determination part 44 again sets the target load angle $D_{i\_tgt}$, and the command value output part 46 immediately transmits to the motor control part 17B a command value of displacement of the hydraulic motor 14B for achieving new mechanical input $P_{m3}$ that possibly brings the load angle D of the synchronous generator 15 closer to the new target load angle $D_{i\_tgt}$.

In another embodiment, when the abnormal event is detected in the grid 4 by the abnormality detection part 28, the target mechanical input determination part sets the target mechanical input $P_{m\_tgt}$ to $P_{m2}$, and the command value output part 46 transmits to the motor control part 17B of each wind turbine generator 12-i a command value of the hydraulic motor 14B for achieving the target mechanical input $P_{m2}$. Similarly, after the line on which the abnormal event has occurred is shut off, the target mechanical input determination part sets the target mechanical input $P_{m\_tgt}$ to $P_{m3}$, and the command value output part 46 transmits to the motor control part 17B of each wind turbine generator 12-i a new command value of the hydraulic motor 14B for achieving the target mechanical input $P_{m3}$.

In some embodiments, the target load-angle determination part 44 and the target mechanical-input determination part take into account individual information of each wind turbine generator 12 upon determining the target load angle $D_{i\_tgt}$ or the target mechanical input $P_{m\_tgt}$.

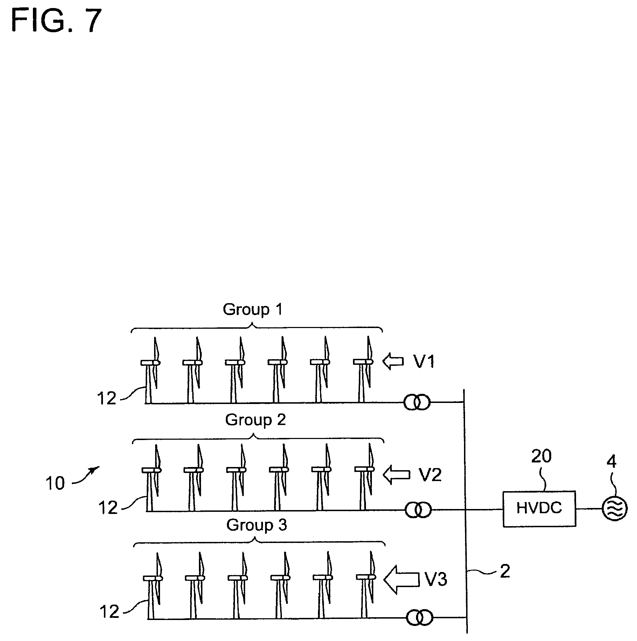

FIG. 7 is a diagram illustrating individual information of each wind turbine generator 12. The wind farm 10 illustrated in the drawing includes a plurality of wind turbine generators 12 that belongs to each of groups 1 to 3. Each wind turbine generator 12 of the wind farm 10 has individual information that includes at least one of the wind velocity, the pitch angle of the blades of the rotor 13, the rotation speed of the rotor 13, the pressure of the accumulator 14E, the power generation output, the reactive power, the power factor, or the power loss of the feeder cable.

As illustrated in FIG. 7, the wind velocity received by wind turbine generators 12 of the groups 1 to 3 are respectively V1, V2, V3, varied between the groups 1 to 3. Further, even within the same group, the wind velocity varies between the individual wind turbine generators 12. Further, a typical variable-speed wind turbine generator is operated at a desired operation point corresponding to the wind velocity. Thus, if the wind velocity is varied between the wind turbine generators 12, the operation state (the pitch angle of blades, the rotation speed of the rotor 13, the pressure of the accumulator 14E, the power generation output, the reactive power, and the power factor) of the wind turbine generators 12 varies as well. Further, the lengths of the feeder cables to the HVDC 20 are varied between the wind turbine generators 12, and thus the power loss of the feeder cable is varied between the wind turbine generators 12.

In one embodiment, the target load-angle determination part 44 sets the target load-angle $D_{i\_tgt}$ to be smaller for a wind turbine generator 12 which contributes greatly to the active power outputted from the entire wind farm 10 than for the other wind turbine generators, based on individual information of the wind turbine generators 12. For instance, the target load-angle determination part 44 sets the target load-angle $D_{i\_tgt}$ to be smaller for a wind turbine generator 12 receiving a large wind velocity and having a small distance to the HVDC 20 than for a wind turbine generator 12 receiving a small wind velocity and having a large distance to the HVDC 20, because contribution to active power outputted from the entire wind farm 10 is larger in the former than in the latter.

In one embodiment, the target load-angle determination part 44 sets the target load angle $D_{i\_tgt}$ to be smaller for a wind turbine generator 12 having a small pressure $P_{ACC}$ in the accumulator 14E than for other wind turbine generators 12, based on individual information of each wind turbine generator 12. To achieve a small target load angle $D_{i\_tgt}$, the mechanical input $P_m$ of the hydraulic motor 14B has to be reduced, which results in an imbalance between the discharge rate of the hydraulic pump 14A and the suction rate of the hydraulic motor 14B, the pressure of the high pressure oil line 14C thereby rising easily. Thus, the target load angle $D_{i\_tgt}$ is set to be smaller for a wind turbine generator having an accumulator 14E that is capable of absorbing a difference between the discharge rate of the hydraulic pump 14A and the suction rate of the hydraulic motor 14B, which is an accumulator 14E having a small pressure $P_{ACC}$, than for other wind turbine generators 12, which makes it possible to reduce pressure rise in the high pressure oil line 14C while restricting acceleration of the synchronous generators 15.

Further, in some embodiments, the target mechanical-input determination part sets the target mechanical input $P_{m\_tgt}$ to be smaller for a wind turbine generator 12 having a small pressure $P_{ACC}$ in the accumulator 14E than for other wind turbine generators 12, based on individual information of each wind turbine generator 12.

In some embodiments, the target load-angle determination part 44 sets the target load angle $D_{i\_tgt}$ within a range of not less than zero radian for a wind turbine generator 12 in which the rotation speed of the rotor 13 has reached the rated rotation speed, and allows the target load angle $D_{i\_tgt}$ to fall within a range less than zero radian for other wind turbine generators 12, based on individual information of the wind turbine generators 12.

In this way, the synchronous generator 15 of a wind turbine generator 12, which is receiving relatively weak wind and in which the rotation speed of the rotor 13 has not reached the rated rotation speed, is temporarily operated to function as a motor, which makes it possible to consume active power from the other wind turbine generators 12. As a result, it is possible to effectively recover the excess of the active power generated from the wind farm 10 with respect to the active power that can be supplied from the SEC toward the grid 4.

In some embodiments, to avoid deviance of the pressure of the high pressure oil line 14C from the managed range by adjusting displacement of the hydraulic motor 14B by the motor control part 17B, the pump control part 17A adjusts the displacement of the hydraulic pump 14A, and the pitch control unit 18 controls the pitch angle.

For instance, in a case where pressure rise in the high pressure oil line 14C is anticipated due to reduction of the displacement of the hydraulic motor 14B, the motor control part 17A adjusts the displacement of the hydraulic pump 14A so that the difference between the suction rate of the hydraulic motor 14B and the discharge rate of the hydraulic pump 14A becomes small, the difference being determined based on the displacement of the hydraulic motor 14B. Then, to restrict acceleration of the rotor 13, the pitch control unit 18 adjusts the pitch angle of the blades to reduce the wind energy received by the blades.

Further, in some embodiments, immediately after an abnormal event in the grid 4 is detected by the abnormality detection part 28, the exciter 16 of each wind turbine generator 12 is controlled so that the field current of the corresponding synchronous generator 15 is increased. Here, increasing the field current means shifting upward the $P_e$-D curve in the state 2 or 3 in FIGs. 4 and 6.

In this way, the inner induction voltage of the synchronous generator 15 rises and the electrical output $P_e$ of the synchronous generator 15 increases. Thus, the synchronizing power $dP_e / dD$ of the synchronous generator 15 increases, so that the first-wave power swing of the synchronous generator 15 after occurrence of an abnormal event is restricted, and the transient stability is improved. Step out of the synchronous generator 15 is accordingly prevented.

The control for the exciter 16 for improving the above transient stability can be performed suitably by super-quick response excitation control of a thyristor type, for instance. Here, in view of improvement of the steady-state stability of the synchronous generator 15, a power system stabilizer (PSS) may be provided for an exciter control part 19.

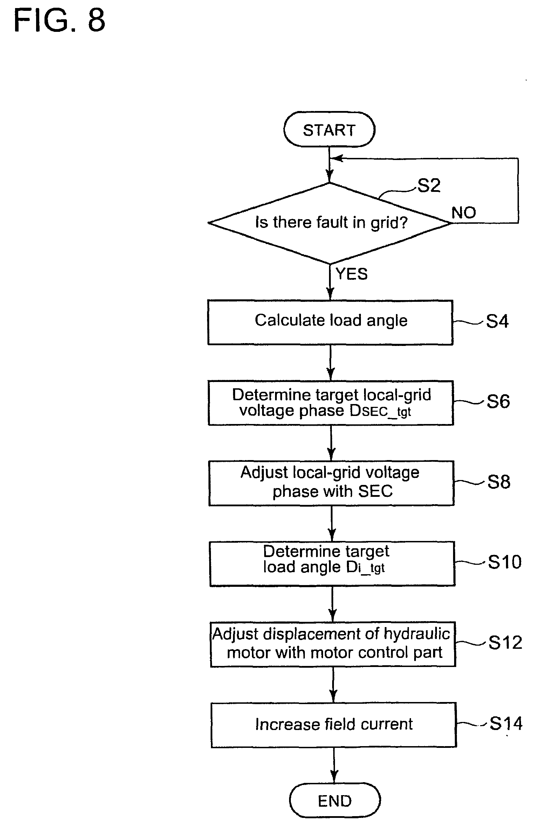

Next, the method of operating a wind power generation facility will be described. FIG. 8 is a flowchart of a process of an operation method of a wind power generation facility according to one embodiment.

As illustrated in FIG. 8, it is determined whether an abnormal event of the grid 4 is detected by the abnormality detection part 28 (step S2). If an abnormal event of the grid 4 is not detected, step 2 is repeated. If an abnormal event of the grid 4 is detected, the process advances to step 4, and the load angle $D_i$ of the synchronous generator 15 of each generator 12 is calculated. Subsequently, based on the load angle $D_i$ of the synchronous generator 15, the target local grid voltage phase $D_{SEC\_tgt}$ is determined so that the load angle $D_i$ related to each wind turbine generator 12-i becomes small (step S6). Then, the voltage phase of the local grid 2 is adjusted to the target local grid voltage phase $D_{SEC\_tgt}$ by the SEC 22 so that the target local-grid voltage phase $D_{SEC\_tgt}$ is achieved (step S8).

Further, in step S10, the target load angle $D_{i\_tgt}$ related to each wind turbine generator 12-i is determined based on the load angle $D_i$ of the synchronous generator 15 and individual information of each wind turbine generator 12-i received from the wind farm 10. Here, individual information of each wind turbine generator 12-i includes at least one of the wind velocity, the pitch angle of blades of the rotor 13, the rotation speed of the rotor 13, the pressure of the accumulator 14E, the power generation output, the reactive power, the power factor, or the power loss of the feeder cable. Then, the displacement of the hydraulic motor 14B is adjusted by the motor control part 17B of each wind turbine generator 12-i so that the target load angle $D_{i\_tgt}$ related to each wind turbine generator 12-i is achieved (step S12).

Further, in step S14, the exciter 16 of each wind turbine generator 12 is controlled so that field current of the synchronous generator 15 is increased.

Here, in the embodiment illustrated in FIG. 8, when an abnormal event in the grid 4 occurs in step S2, control of the SEC 22 including steps S4 to S8, control of the hydraulic motor 14B including steps S10 to S12, and control of the exciter 16 including step S14 are performed in sequence. In another embodiment, the order of the above controls may be shuffled, or at least two of the above controls may be performed simultaneously, for instance.

Further, regardless of the determination result (step S2) of presence of an abnormal event of the grid 4, calculation of the load angle $D_i$ in step S4, determination of the target local grid voltage phase $D_{SEC\_tgt}$ in step S6, and determination of the target load angle $D_{i\_tgt}$ in step S10 may be regularly performed. In this case, it is possible to control the SEC 22 using the target local-grid voltage phase $D_{SEC\_tgt}$ having been already determined, and to control the hydraulic motor 14B using the target load angle $D_{i\_tgt}$ having been already determined, immediately after occurrence of an abnormal event in the grid 4.

Further, in the exemplary embodiment illustrated in FIG. 8, the displacement of the hydraulic motor 14B is adjusted in step S12 based on the target load angle $D_{i\_tgt}$ determined in step S10. However, the displacement of the hydraulic motor 14B may be adjusted based on the target mechanical input $P_{m\_tgt}$ determined based on individual information of each wind turbine generator 12-i obtained from the wind farm 10 and the terminal voltage and the inner induction voltage of the synchronous generator 15.

As described above, according to the above embodiment, when an abnormal event of the grid 4 is detected by the abnormality detection part 28, the SEC 22 adjusts the local-grid voltage phase under control of the first WF controller 30, so that the load angle $D_i$ of the synchronous generator 15 of each wind turbine generator 12-i is reduced. In this way, the power generation output (active power) of each wind turbine generator 12-i of the wind farm 10 is reduced collectively and quickly by the control of the SEC 22, which makes it possible to reduce the excess of active power generated from the wind farm 10 with respect to the active power that can be supplied to the grid 4 from the SEC 22. Further, it is unnecessary to provide a component for dissipating excessive energy, such as an electric resistor.

Thus, it is possible to achieve an FRT function for system malfunction at low cost.

Embodiments of the present invention were described in detail above, but the present invention is not limited thereto, and various amendments and modifications may be implemented within a scope that does not depart from the present invention. For instance, more than one of the above embodiment may be suitably combined.

Reference Signs List

| 1 | Wind power generation facility |
|---|---|
| 2 | Local grid |
| 4 | Grid |
| 6 | WF central control unit |
| 10 | Wind farm |
| 12 | Wind turbine generator |
| 13 | Rotor |
| 14 | Drivetrain |
| 14A | Hydraulic pump |
| 14B | Hydraulic motor |
| 14C | High pressure oil line |
| 14D | Low pressure oil line |
| 14E | Accumulator |

| 15 | Synchronous generator |
|---|---|
| 16 | Exciter |
| 17A | Pump control part |
| 17B | Motor control part |
| 18 | Pitch control part |
| 19 | Exciter control part |
| 20 | HVDC (High voltage direct current system) |
| 22 | Sending end converter (SEC) |
| 24 | Receiving end converter (REC) |
| 26 | Direct current transmission channel |
| 27 | Detector |
| 28 | Abnormality detection part |
| 30 | First WF controller |
| 32 | Load-angle calculation part |
| 34 | Target phase determination part |
| 36 | Command value output part |
| 40 | Second WF controller |
| 42 | Load angle calculation part |
| 44 | Target load-angle determination part |
| 46 | Command value output part |

**Claims**

1. A wind power generation facility (1), comprising:

   a wind farm (10) including a plurality of wind turbine generators (12) each of which includes a synchronous generator (15);
   a local grid (2) to which the wind farm (10) is connected;
   a direct-current transmission channel (26) disposed between the local grid (2) and a grid (4);
   a sending end converter (22) for converting alternate current from the local grid (2) into direct current and supplying the direct current to the direct-current transmission channel (26);
   a receiving end converter (24) for converting the direct current from the direct-current transmission channel (26) into alternate current and supplying the alternate current to the grid (4);
   an abnormality detection part (28) for detecting an abnormal event of the grid (4); and

   **characterized in that** it comprises a first WF controller (30) for controlling the sending end converter (22) and adjusting a local-grid voltage phase ($D_{SEC}$) of the local grid (2) so as to reduce a load angle ($D_i$) which indicates a difference between a generator voltage phase ($d_i$) of the synchronous generator (15) of each wind turbine generator (12) and the local-grid voltage phase ($D_{SEC}$), when the abnormal event of the grid (4) is detected by the abnormality detection part (28).

2. The wind power generation facility (1) according to claim 1,
   wherein the first WF controller (30) is configured to obtain a target local-grid voltage phase ($D_{SEC\_tgt}$) such that a sum of a square of a difference between the target local-grid voltage phase ($D_{SEC\_tgt}$) and the generator voltage phase ($d_i$) of each wind turbine generator (12) is a minimum, and to control the sending end converter (22) so that the local-grid voltage phase ($D_{SEC}$) becomes the target local-grid voltage phase ($D_{SEC\_tgt}$).

3. The wind power generation facility (1) according to claim 1,
   wherein the first WF controller (30) is configured to select a minimum phase of the generator voltage phases ($d_i$) of the wind turbine generators (12) as a target local-grid voltage phase ($D_{SEC\_tgt}$), and to control the sending end converter (22) so that the local-grid voltage phase ($D_{SEC}$) becomes the target local-grid voltage phase ($D_{SEC\_tgt}$).

4. The wind power generation facility (1) according to any one of claims 1 to 3,
   wherein each wind turbine generator (12) includes a hydraulic pump (14A) for generating pressurized oil by being driven by wind energy, a hydraulic motor (14B) for inputting mechanical energy to the corresponding synchronous generator (15) by being driven by the pressurized oil, and a motor control part (17B) for controlling displacement of the hydraulic motor (14B) of the wind turbine generator (12), and

wherein the wind power generation facility (1) further comprises a second WF controller (40) configured to transmit a command value of the displacement to each motor control part (17B) so that the mechanical energy of the hydraulic motor (14B) of each wind turbine generator (12) is reduced, when the abnormal event of the grid (4) is detected by the abnormality detection part (28).

5. The wind power generation facility (1) according to claim 4,
wherein the second WF controller (40) is configured to determine an amount of reduction by which the mechanical energy is reduced for each wind turbine generator (12) based on individual information of the corresponding wind turbine generator (12), and to transmit the command value to the hydraulic motor (14B) of each wind turbine generator (12) based on the corresponding amount of reduction.

6. The wind power generation facility (1) according to claim 5,
wherein the second WF controller (40) is configured to limit the load angle ($D_i$) within a range not less than zero radian for a wind turbine generator (12) in which a rotor rotation speed has reached a rated rotation speed, and to allow the load angle ($D_i$) to be in a range less than zero radian for other wind turbine generators (12), from among the plurality of wind turbine generators (12).

7. The wind power generation facility (1) according to any one of claims 1 to 6,
wherein each wind turbine generator (12) of the wind farm (10) further includes an exciter (16) for supplying field current to field winding of the corresponding synchronous generator (15), and an exciter control part (19) for controlling the exciter (16) of each wind turbine generator (12) so that the field current increases immediately after the abnormal event of the grid (4) is detected by the abnormality detection part (28).

8. A method of operating a wind power generation facility (1) which comprises: a wind farm (10) including a plurality of wind turbine generators (12) each of which includes a synchronous generator (15); a local grid (2) to which the wind farm (10) is connected; a direct-current transmission channel (26) disposed between the local grid (2) and a grid (4); a sending end converter (22) for converting alternate current from the local grid (2) into direct current and supplying the direct current to the direct-current transmission channel (26); and a receiving end converter (24) for converting the direct current from the direct-current transmission channel (26) into alternate current and supplying the alternate current to the grid (4), the method comprising:

a detection step of detecting an abnormal event of the grid (4); and

the method being **characterized in that** it comprises a converter control step of controlling the sending end converter (22) so as to reduce a load angle which indicates a difference between a generator voltage phase ($d_i$) of the synchronous generator (15) of each wind turbine generator (12) and a local-grid voltage phase ($D_{SEC}$) of the local grid (2), when the abnormal event is detected in the detection step.

9. The method of operating a wind power generation facility (1) according to claim 8,
wherein, in the converter control step, a target local-grid voltage phase ($D_{SEC\_tgt}$) is obtained such that a sum of a square of a difference between the target local-grid voltage phase ($D_{SEC\_tgt}$) and the generator voltage phase ($d_i$) of each wind turbine generator (12) is a minimum, and the sending end converter (22) is controlled so that the local-grid voltage phase ($D_{SEC}$) becomes the target local-grid voltage phase ($D_{SEC\_tgt}$).

10. The method of operating a wind power generation facility (1) according to claim 8,
wherein, in the converter control step, a minimum phase of the generator voltage phases ($d_i$) of the wind turbine generators (12) is selected as a target local-grid voltage phase ($D_{SEC\_tgt}$), and the sending end converter (22) is controlled so that the local-grid voltage phase ($D_{SEC}$) becomes the target local-grid voltage phase ($D_{SEC\_tgt}$).

11. The method of operating a wind power generation facility (1) according to any one of claims 8 to 10,
wherein each wind turbine generator (12) includes a hydraulic pump (14A) for generating pressurized oil by being driven by wind energy, a hydraulic motor (14B) for inputting mechanical energy to the corresponding synchronous generator (15) by being driven by the pressurized oil, and a motor control part (17B) for controlling displacement of the hydraulic motor (14B) of the wind turbine generator (12), and
wherein the method further comprises a motor command step of transmitting a command value of the displacement to each motor control part (17B) so that the mechanical energy of the hydraulic motor (14B) of each wind turbine generator (12) is reduced, when the abnormal event is detected in the detection step.

12. The method of operating a wind power generation facility (1) according to claim 11,
wherein, in the motor command step, an amount of reduction by which the mechanical energy is reduced is determined for each wind turbine generator (12) based on individual information of the corresponding wind turbine generator (12), and the command value is transmitted to the hydraulic motor (14B) of each wind turbine generator (12) based on the corresponding amount of reduction.

13. The method of operating a wind power generation facility (1) according to claim 12,
wherein, in the motor command step, the load angle ($D_i$) is limited within a range not less than zero radian for a wind turbine generator (12) in which a rotor rotation speed has reached a rated rotation speed, and the load angle ($D_i$) is allowed to be in a range less than zero radian for other wind turbine generators (12), from among the plurality of wind turbine generators (12).

14. The method of operating a wind power generation facility (1) according to any one of claims 8 to 13,
wherein each wind turbine generator (12) of the wind farm (10) further includes an exciter (16) for supplying field current to field winding of the corresponding synchronous generator (15), and
wherein the method further comprises an exciter control step of controlling the exciter (16) of each wind turbine generator (12) so that the field current increases immediately after the abnormal event is detected in the detection step.

15. A control device of a wind farm (10) included in the wind power generation facility (1) according to any one of claims 1 to 7, the control device comprising
a first WF controller (30) for controlling the sending end converter (22) and adjusting a local-grid voltage phase ($D_{SEC}$) of the local grid (2) so as to reduce a load angle ($D_i$) which indicates a difference between a generator voltage phase ($d_i$) of the synchronous generator (15) of each wind turbine generator (12) and the local-grid voltage phase ($D_{SEC}$), when the abnormal event of the grid (4) is detected.

**Patentansprüche**

1. Windstromerzeugungseinrichtung (1), umfassend:

   einen Windpark (10) mit mehreren Windkraftanlagen (12), von denen jede einen Synchrongenerator (15) umfasst,
   ein Ortsnetz (2), mit dem der Windpark (10) verbunden ist,
   einen Gleichstromübertragungskanal (26), der zwischen dem Ortsnetz (2) und einem Netz (4) angeordnet ist,
   einen übertragungsseitigen Umrichter (22) zum Umrichten von Wechselstrom aus dem Ortsnetz (2) in Gleichstrom und Zuführen des Gleichstroms zu dem Gleichstromübertragungskanal (26),
   einen empfangsseitigen Umrichter (24) zum Umrichten des Gleichstroms aus dem Gleichstromübertragungskanal (26) in Wechselstrom und Zuführen des Wechselstroms zu dem Netz (4),
   einen Anomaliedetektierabschnitt (28) zum Detektieren eines abnormalen Ereignisses des Netzes (4), und

   **dadurch gekennzeichnet, dass** sie eine erste Windparksteuerung (30) zum Steuern des übertragungsseitigen Umrichters (22) und Einstellen einer Ortsnetzspannungsphase ($D_{SEC}$) des Ortsnetzes (2) umfasst, um einen Lastwinkel ($D_i$) zu reduzieren, der eine Differenz zwischen einer Generatorspannungsphase ($d_i$) des Synchrongenerators (15) jeder Windkraftanlage (12) und der Ortsnetzspannungsphase ($D_{SEC}$) angibt, wenn das abnormale Ereignis des Netzes (4) durch den Anomaliedetektierabschnitt (28) detektiert wird.

2. Windstromerzeugungseinrichtung (1) nach Anspruch 1,
wobei die erste Windparksteuerung (30) dazu ausgebildet ist, eine Ortsnetz-Sollspannungsphase ($D_{SEC\_tgt}$) zu erhalten, derart, dass eine Summe aus einem Quadrat einer Differenz zwischen der Ortsnetz-Sollspannungsphase ($D_{SEC\_tgt}$) und der Generatorspannungsphase ($d_i$) jeder Windkraftanlage (12) ein Minimum ist, und den übertragungsseitigen Umrichter (22) derart zu steuern, dass die Ortsnetz-Spannungsphase ($D_{SEC}$) die Ortsnetz-Sollspannungsphase ($D_{SEC\_tgt}$) wird.

3. Windstromerzeugungseinrichtung (1) nach Anspruch 1,
wobei die erste Windparksteuerung (30) dazu ausgebildet ist, eine minimale Phase der Generatorspannungsphasen ($d_i$) der Windkraftanlagen (12) als Ortsnetz-Sollspannungsphase ($D_{SEC\_tgt}$) auszuwählen und den übertragungsseitigen Umrichter (22) derart zu steuern, dass die Ortsnetzspannungsphase ($D_{SEC}$) die Ortsnetz-Sollspannungsphase ($D_{SEC\_tgt}$) wird.

4. Windstromerzeugungseinrichtung (1) nach einem beliebigen der Ansprüche 1 bis 3, wobei jede Windkraftanlage (12) eine Hydraulikpumpe (14A) zum Erzeugen von Drucköl durch Angetriebenwerden durch Windenergie, einen Hydraulikmotor (14B) zum Einbringen mechanischer Energie in den entsprechenden Synchrongenerator (15) durch Angetriebenwerden durch das Drucköl und einen Motorsteuerungsabschnitt (17B) zum Steuern des Schluckvolumens des Hydraulikmotors (14B) der Windkraftanlage (12) umfasst, und wobei das Windstromerzeugungseinrichtung (1) ferner eine zweite Windparksteuerung (40) umfasst, die dazu ausgebildet ist, einen Befehlswert des Schluckvolumens an jeden Motorsteuerungsabschnitt (17B) zu übertragen, derart, dass die mechanische Energie des Hydraulikmotors (14B) jeder Windkraftanlage (12) reduziert wird, wenn das abnormale Ereignis des Netzes (4) durch den Anomaliedetektierabschnitt (28) detektiert wird.

5. Windstromerzeugungseinrichtung (1) nach Anspruch 4, wobei die zweite Windparksteuerung (40) dazu ausgebildet ist, ein Reduktionsausmaß, um das die mechanische Energie für jede Windkraftanlage (12) reduziert wird, basierend auf individuellen Informationen der entsprechenden Windkraftanlage (12) zu bestimmen und basierend auf dem entsprechenden Reduktionsausmaß den Befehlswert zu dem Hydraulikmotor (14B) jeder Windkraftanlage (12) zu übertragen.

6. Windstromerzeugungseinrichtung (1) nach Anspruch 5, wobei die zweite Windparksteuerung (40) dazu ausgebildet ist, den Lastwinkel ($D_i$) für eine Windkraftanlage (12), in der eine Rotorrotationsgeschwindigkeit eine Nennrotationsgeschwindigkeit erreicht hat, innerhalb eines Bereichs von nicht kleiner als null Radiant zu begrenzen und zu ermöglichen, dass der Lastwinkel ($D_i$) für andere Windkraftanlagen (12) von den mehreren Windkraftanlagen (12) in einem Bereich von kleiner als null Radiant sein darf.

7. Windstromerzeugungseinrichtung (1) nach einem beliebigen der Ansprüche 1 bis 6, wobei jede Windkraftanlage (12) des Windparks (10) ferner einen Erreger (16) zum Zuführen von Feldstrom zu der Feldwicklung des entsprechenden Synchrongenerators (15) und einen Erregersteuerungsabschnitt (19) zum Steuern des Erregers (16) jeder Windkraftanlage (12) derart, dass der Feldstrom unmittelbar zunimmt, nachdem das abnormale Ereignis des Netzes (4) durch den Anomaliedetektierabschnitt (28) detektiert wurde, umfasst.

8. Verfahren zum Betreiben einer Windstromerzeugungseinrichtung (1), die umfasst: einen Windpark (10) mit mehreren Windkraftanlagen (12), von denen jede einen Synchrongenerator (15) umfasst, ein Ortsnetz (2), mit dem der Windpark (10) verbunden ist, einen Gleichstromübertragungskanal (26), der zwischen dem Ortsnetz (2) und einem Netz (4) angeordnet ist, einen übertragungsseitigen Umrichter (22) zum Umrichten von Wechselstrom aus dem Ortsnetz (2) in Gleichstrom und Zuführen des Gleichstroms zu dem Gleichstromübertragungskanal (26), und einen empfangsseitigen Umrichter (24) zum Umrichten des Gleichstroms aus dem Gleichstromübertragungskanal (26) in Wechselstrom und Zuführen des Wechselstroms zu dem Netz (4), wobei das Verfahren umfasst:

   einen Detektierschritt zum Detektieren eines abnormalen Ereignisses des Netzes (4), und

   wobei das Verfahren **dadurch gekennzeichnet ist, dass** es einen Umrichtersteuerungsschritt zum Steuern des übertragungsseitigen Umrichters (22) umfasst, um einen Lastwinkel zu reduzieren, der eine Differenz zwischen einer Generatorspannungsphase ($d_i$) des Synchrongenerators (15) jeder Windkraftanlage (12) und einer Ortsnetzspannungsphase ($D_{SEC}$) des Ortsnetzes (2) angibt, wenn das abnormale Ereignis in dem Detektierschritt detektiert wird.

9. Verfahren zum Betreiben einer Windstromerzeugungseinrichtung (1) nach Anspruch 8, wobei, in dem Umrichtersteuerungsschritt, eine Ortsnetz-Sollspannungsphase ($D_{SEC\_tgt}$) derart erhalten wird, dass eine Summe aus einem Quadrat einer Differenz zwischen der Ortsnetz-Sollspannungsphase ($D_{SEC\_tgt}$) und der Generatorspannungsphase ($d_i$) jeder Windkraftanlage (12) ein Minimum ist, und der übertragungsseitige Umrichter (22) derart gesteuert wird, dass die Ortsnetz-Spannungsphase ($D_{SEC}$) die Ortsnetz-Sollspannungsphase ($D_{SEC\_tgt}$) wird.

10. Verfahren zum Betreiben einer Windstromerzeugungseinrichtung (1) nach Anspruch 8, wobei, in dem Umrichtersteuerungsschritt, eine minimale Phase der Generatorspannungsphasen ($d_i$) der Windkraftanlagen (12) als Ortsnetz-Sollspannungsphase ($D_{SEC\_tgt}$) ausgewählt wird und der übertragungsseitige Umrichter (22) derart gesteuert wird, dass die Ortsnetzspannungsphase ($D_{SEC}$) die Ortsnetz-Sollspannungsphase ($D_{SEC\_tgt}$) wird.

**EP 2 908 004 B1**

**11.** Verfahren zum Betreiben einer Windstromerzeugungseinrichtung (1) nach einem beliebigen der Ansprüche 8 bis 10, wobei jede Windkraftanlage (12) eine Hydraulikpumpe (14A) zum Erzeugen von Drucköl durch Angetriebenwerden durch Windenergie, einen Hydraulikmotor (14B) zum Einbringen mechanischer Energie in den entsprechenden Synchrongenerator (15) durch Angetriebenwerden durch das Drucköl und einen Motorsteuerungsabschnitt (17B) zum Steuern des Schluckvolumens des Hydraulikmotors (14B) der Windkraftanlage (12) umfasst, und wobei das Verfahren ferner einen Motorbefehlsschritt zum Übertragen eines Befehlswerts des Schluckvolumens an jeden Motorsteuerungsabschnitt (17B) umfasst, derart, dass die mechanische Energie des Hydraulikmotors (14B) jeder Windkraftanlage (12) reduziert wird, wenn das abnormale Ereignis in dem Detektierschritt detektiert wird.

**12.** Verfahren zum Betreiben einer Windstromerzeugungseinrichtung (1) nach Anspruch 11, wobei, in dem Motorbefehlsschritt, ein Reduktionsausmaß, um das die mechanische Energie reduziert wird, für jede Windkraftanlage (12) basierend auf individuellen Informationen der entsprechenden Windkraftanlage (12) bestimmt wird und basierend auf dem entsprechenden Reduktionsausmaß der Befehlswert zu dem Hydraulikmotor (14B) jeder Windkraftanlage (12) übertragen wird.

**13.** Verfahren zum Betreiben einer Windstromerzeugungseinrichtung (1) nach Anspruch 12, wobei, in dem Motorbefehlsschritt, der Lastwinkel ($D_i$) für eine Windkraftanlage (12), in der eine Rotorrotationsgeschwindigkeit eine Nennrotationsgeschwindigkeit erreicht hat, innerhalb eines Bereichs von nicht kleiner als null Radiant begrenzt wird und ermöglicht wird, dass der Lastwinkel ($D_i$) für andere Windkraftanlagen (12) von den mehreren Windkraftanlagen (12) in einem Bereich von kleiner als null Radiant sein darf.

**14.** Verfahren zum Betreiben einer Windstromerzeugungseinrichtung (1) nach einem beliebigen der Ansprüche 8 bis 13, wobei jede Windkraftanlage (12) des Windparks (10) ferner einen Erreger (16) zum Zuführen von Feldstrom zu der Feldwicklung des entsprechenden Synchrongenerators (15) umfasst, und wobei das Verfahren ferner einen Erregersteuerungsschritt zum Steuern des Erregers (16) jeder Windkraftanlage (12) derart, dass der Feldstrom unmittelbar zunimmt, nachdem das abnormale Ereignis in dem Detektierschritt detektiert wurde, umfasst.

**15.** Steuerungsvorrichtung eines Windparks (10), der in der Windstromerzeugungseinrichtung (1) nach einem beliebigen der Ansprüche 1 bis 7 enthalten ist, wobei die Steuerungsvorrichtung umfasst:

eine erste Windparksteuerung (30) zum Steuern des übertragungsseitigen Umrichters (22) und Einstellen einer Ortsnetzspannungsphase ($D_{SEC}$) des Ortsnetzes (2), um einen Lastwinkel ($D_i$) zu reduzieren, der eine Differenz zwischen einer Generatorspannungsphase ($d_i$) des Synchrongenerators (15) jeder Windkraftanlage (12) und der Ortsnetzspannungsphase ($D_{SEC}$) angibt, wenn das abnormale Ereignis des Netzes (4) detektiert wird.

**Revendications**

**1.** Installation de génération d'énergie éolienne (1), comportant :

une ferme éolienne (10) comprenant une pluralité d'éoliennes (12) dont chacune comprend un générateur synchrone (15) ;
un réseau local (2) auquel la ferme éolienne (10) est reliée ;
un canal de transmission à courant continu (26) disposé entre le réseau local (2) et un réseau (4) ;
un convertisseur d'extrémité d'envoi (22) destiné à convertir du courant alternatif provenant du réseau local (2) en courant continu et à délivrer le courant continu au canal de transmission de courant continu (26) ;
un convertisseur d'extrémité de réception (24) destiné à convertir le courant continu provenant du canal de transmission de courant continu (26) en courant alternatif et à délivrer le courant alternatif au réseau (4) ;
un organe de détection d'anomalie (28) destiné à détecter un événement anormal du réseau (4) ; et

**caractérisée en ce qu'**elle comporte un premier dispositif de commande de ferme éolienne (30) destiné à commander le convertisseur d'extrémité d'envoi (22) et à ajuster une phase de tension de réseau local ($D_{SEC}$) du réseau local (2) de façon à réduire un angle de charge ($D_i$) qui indique une différence entre une phase de tension de générateur ($d_i$) du générateur synchrone (15) de chaque éolienne (12) et la phase de tension de réseau local ($D_{SEC}$), quand l'événement anormal du réseau (4) est détecté par l'organe de détection d'anomalie (28).

**2.** Installation de génération d'énergie éolienne (1) selon la revendication 1,

dans laquelle le premier dispositif de commande de ferme éolienne (30) est configuré pour obtenir une phase de tension de réseau local cible ($D_{SEC\_tgt}$) de telle sorte qu'une somme d'un carré d'une différence entre la phase de tension de réseau local cible ($D_{SEC\_tgt}$) et la phase de tension de générateur ($d_i$) de chaque éolienne (12) est un minimum, et pour commander le convertisseur d'extrémité d'envoi (22) de telle sorte que la phase de tension de réseau local ($D_{SEC}$) devient la phase de tension de réseau local cible ($D_{SEC\_tgt}$).

3. Installation de génération d'énergie éolienne (1) selon la revendication 1,
dans laquelle le premier dispositif de commande de ferme éolienne (30) est configuré pour sélectionner une phase minimum des phases de tension de générateur ($d_i$) des éoliennes (12) comme phase de tension de réseau local cible ($D_{SEC\_tgt}$), et pour commander le convertisseur d'extrémité d'envoi (22) de telle sorte que la phase de tension de réseau local ($D_{SEC}$) devient la phase de tension de réseau local cible ($D_{SEC\_tgt}$).

4. Installation de génération d'énergie éolienne (1) selon l'une quelconque des revendications 1 à 3,
dans laquelle chaque éolienne (12) comprend une pompe hydraulique (14A) destinée à générer de l'huile sous pression en étant entraînée par de l'énergie éolienne, un moteur hydraulique (14B) destiné à fournir de l'énergie mécanique dans le générateur synchrone correspondant (15) en étant entraîné par l'huile sous pression, et un organe de commande de moteur (17B) destiné à commander un déplacement du moteur hydraulique (14B) de l'éolienne (12), et
dans laquelle l'installation de génération d'énergie éolienne (1) comporte en outre un deuxième dispositif de commande de ferme éolienne (40) configuré pour transmettre une valeur de commande du déplacement à chaque organe de commande de moteur (17B) de telle sorte que l'énergie mécanique du moteur hydraulique (14B) de chaque éolienne (12) est réduite, quand l'événement anormal du réseau (4) est détecté par l'organe de détection d'anomalie (28).

5. Installation de génération d'énergie éolienne (1) selon la revendication 4,
dans laquelle le deuxième dispositif de commande de ferme éolienne (40) est configuré pour déterminer une quantité de réduction grâce à laquelle l'énergie mécanique est réduite pour chaque éolienne (12) sur la base d'une information individuelle de l'éolienne correspondante (12), et pour transmettre la valeur de commande au moteur hydraulique (14B) de chaque éolienne (12) sur la base de la quantité de réduction correspondante.

6. Installation de génération d'énergie éolienne (1) selon la revendication 5,
dans laquelle le deuxième dispositif de commande de ferme éolienne (40) est configuré pour limiter l'angle de charge ($D_1$) dans une plage qui n'est pas inférieure à zéro radian pour une éolienne (12) dont une vitesse de rotation de rotor a atteint une vitesse de rotation nominale, et pour permettre à l'angle de charge ($D_i$) d'être dans une plage inférieure à zéro radian pour d'autres éoliennes (12), parmi la pluralité d'éoliennes (12).

7. Installation de génération d'énergie éolienne (1) selon l'une quelconque des revendications 1 à 6,
dans laquelle chaque éolienne (12) de la ferme éolienne (10) comprend en outre un excitateur (16) destiné à délivrer du courant inducteur au bobinage d'excitation du générateur synchrone correspondant (15), et un organe de commande d'excitateur (19) destiné à commander l'excitateur (16) de chaque éolienne (12) de telle sorte que le courant inducteur augmente immédiatement après que l'événement anormal du réseau (4) est détecté par l'organe de détection d'anomalie (28).

8. Procédé de mise en oeuvre d'une installation de génération d'énergie éolienne (1) qui comporte : une ferme éolienne (10) comprenant une pluralité d'éoliennes (12) dont chacune comprend un générateur synchrone (15) ; un réseau local (2) auquel la ferme éolienne (10) est reliée ; un canal de transmission de courant continu (26) disposé entre le réseau local (2) et un réseau (4) ; un convertisseur d'extrémité d'envoi (22) destiné à convertir du courant alternatif provenant du réseau local (2) en courant continu et à délivrer le courant continu au canal de transmission de courant continu (26) ; et un convertisseur d'extrémité de réception (24) destiné à convertir le courant continu provenant du canal de transmission de courant continu (26) en courant alternatif et à délivrer le courant alternatif au réseau (4), le procédé comportant :

   une étape de détection d'un événement anormal du réseau (4) ; et

le procédé étant **caractérisé en ce qu'**il comporte une étape de commande de convertisseur destinée à commander le convertisseur d'extrémité d'envoi (22) de façon à réduire un angle de charge qui indique une différence entre une phase de tension de générateur ($d_i$) du générateur synchrone (15) de chaque éolienne (12) et une phase de tension de réseau local ($D_{SEC}$) du réseau local (2), quand l'événement anormal est détecté dans l'étape de détection.

**9.** Procédé de mise en oeuvre d'une installation de génération d'énergie éolienne (1) selon la revendication 8, selon lequel, dans l'étape de commande de convertisseur, une phase de tension de réseau local cible ($D_{SEC\_tgt}$) est obtenue de telle sorte qu'une somme d'un carré d'une différence entre la phase de tension de réseau local cible ($D_{SEC\_tgt}$) et la phase de tension de générateur ($d_i$) de chaque éolienne (12) est un minimum, et le convertisseur d'extrémité d'envoi (22) est commandé de telle sorte que la phase de tension de réseau local ($D_{SEC}$) devient la phase de tension de réseau local cible ($D_{SEC\_tgt}$).

**10.** Procédé de mise en oeuvre d'une installation de génération d'énergie éolienne (1) selon la revendication 8, selon lequel, dans l'étape de commande de convertisseur, une phase minimum des phases de tension de générateur ($d_i$) des éoliennes (12) est sélectionnée comme phase de tension de réseau local cible ($D_{SEC\_tgt}$), et le convertisseur d'extrémité d'envoi (22) est commandé de telle sorte que la phase de tension de réseau local ($D_{SEC}$) devient la phase de tension de réseau local cible ($D_{SEC\_tgt}$).

**11.** Procédé de mise en oeuvre d'une installation de génération d'énergie éolienne (1) selon l'une quelconque des revendications 8 à 10,
selon lequel chaque éolienne (12) comprend une pompe hydraulique (14A) destinée à générer de l'huile sous pression en étant entraînée par de l'énergie éolienne, un moteur hydraulique (14B) destiné à fournir de l'énergie mécanique dans le générateur synchrone correspondant (15) en étant entraîné par l'huile sous pression, et un organe de commande de moteur (17B) destiné à commander un déplacement du moteur hydraulique (14B) de l'éolienne (12), et
selon lequel le procédé comporte en outre une étape de commande de moteur destinée à transmettre une valeur de commande du déplacement à chaque organe de commande de moteur (17B) de telle sorte que l'énergie mécanique du moteur hydraulique (14B) de chaque éolienne (12) est réduite, quand l'événement anormal du réseau (4) est détecté dans l'étape de détection.

**12.** Procédé de mise en oeuvre d'une installation de génération d'énergie éolienne (1) selon la revendication 11, selon lequel, dans l'étape de commande de moteur, une quantité de réduction grâce à laquelle l'énergie mécanique est réduite est déterminée pour chaque éolienne (12) sur la base d'une information individuelle de l'éolienne correspondante (12), et la valeur de commande est transmise au moteur hydraulique (14B) de chaque éolienne (12) sur la base de la quantité de réduction correspondante.

**13.** Procédé de mise en oeuvre d'une installation de génération d'énergie éolienne (1) selon la revendication 12, selon lequel, dans l'étape de commande de moteur, l'angle de charge ($D_1$) est limité dans une plage qui n'est pas inférieure à zéro radian pour une éolienne (12) dont une vitesse de rotation de rotor a atteint une vitesse de rotation nominale, et l'angle de charge ($D_i$) peut être dans une plage inférieure à zéro radian pour d'autres éoliennes (12), parmi la pluralité d'éoliennes (12).

**14.** Procédé de mise en oeuvre d'une installation de génération d'énergie éolienne (1) selon l'une quelconque des revendications 8 à 13,
selon lequel chaque éolienne (12) de la ferme éolienne (10) comprend en outre un excitateur (16) destiné à délivrer du courant inducteur au bobinage d'excitation du générateur synchrone correspondant (15), et
selon lequel le procédé comporte en outre une étape de commande d'excitateur destinée à commander l'excitateur (16) de chaque éolienne (12) de telle sorte que le courant inducteur augmente immédiatement après que l'événement anormal est détecté dans l'étape de détection.

**15.** Dispositif de commande d'une ferme éolienne (10) inclus dans l'installation de génération d'énergie éolienne (1) selon l'une quelconque des revendications 1 à 7, le dispositif de commande comportant
un premier dispositif de commande de ferme éolienne (30) destiné à commander le convertisseur d'extrémité d'envoi (22) et à ajuster une phase de tension de réseau local ($D_{SEC}$) du réseau local (2) de façon à réduire un angle de charge ($D_i$) qui indique une différence entre une phase de tension de générateur ($d_i$) du générateur synchrone (15) de chaque éolienne (12) et la phase de tension de réseau local ($D_{SEC}$), quand l'événement anormal du réseau (4) est détecté.

FIG. 1

EP 2 908 004 B1

FIG. 2

EP 2 908 004 B1

# FIG. 3

# FIG. 4

# FIG. 5

EP 2 908 004 B1

FIG. 6

# FIG. 7

Group 1

12

⇐ V1

Group 2

10

12

⇐ V2

Group 3

12

⇐ V3

20

HVDC

4

2

# FIG. 8

```
           ┌─────────┐
           │  START  │
           └─────────┘
                │
                │←─────────────────┐
                ▼           S2     │
            ╱───────────╲          │
           ╱  Is there    ╲   NO   │
           ╲  fault in grid? ╱─────┘
            ╲───────────╱
                │
              YES
                ▼
    ┌───────────────────────┐
    │  Calculate load angle │─── S4
    └───────────────────────┘
                │
                ▼
    ┌───────────────────────┐
    │  Determine target      │─── S6
    │  local-grid            │
    │  voltage phase Dsec_tgt│
    └───────────────────────┘
                │
                ▼
    ┌───────────────────────┐
    │  Adjust local-grid     │─── S8
    │  voltage               │
    │  phase with SEC        │
    └───────────────────────┘
                │
                ▼
    ┌───────────────────────┐
    │  Determine target      │─── S10
    │  load angle Di_tgt     │
    └───────────────────────┘
                │
                ▼
    ┌───────────────────────┐
    │ Adjust displacement of │─── S12
    │ hydraulic              │
    │ motor with motor       │
    │ control part           │
    └───────────────────────┘
                │
                ▼
    ┌───────────────────────┐
    │  Increase field current│─── S14
    └───────────────────────┘
                │
                ▼
           ┌─────────┐
           │   END   │
           └─────────┘
```

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- EP 2270331 A
- WO 2009082326 A
- EP 2258184 A

**Non-patent literature cited in the description**

- **CHRISTIAN FELTES et al.** Enhanced Fault Ride-Through Method for Wind Farms Connected to the Grid Through VSC-Based HVDC Transmission. *IEEE TRANSACTIONS ON POWER SYSTEMS,* 2009, vol. 24 (3), 1537-1546